# EUROPEAN PATENT SPECIFICATION

(11) **EP 1 001 561 B1**
(45) Date of publication and mention of the grant of the patent: **03.08.2005**
(21) Application number: 99122394.2
(22) Date of filing: 10.11.1999
(51) Int. Cl.: H04B 10/10

(54) **Infrared communication device**
Infrarot-Kommunikationsanordnung
Dispositif de communication infrarouge

(30) Priority: 11.11.1998 JP 33503298
(43) Date of publication of application: 17.05.2000
(73) Proprietor: Citizen Electronics Co., Ltd., Fujiyoshida-shi, Yamanashi-ken (JP)
(72) Inventor: Ishii, Hirohiko, c/o Citizen Electronics Co., Ltd., Fujiyoshida-shi, Yamanashi-ken (JP)
(74) Representative: Grünecker, Kinkeldey, Stockmair & Schwanhäusser Anwaltssozietät

(56) References cited:
- EP-A- 0 769 858
- FR-A- 2 494 912
- JP-A- 10 233 471

## Description

The present invention relates to an infrared communication device according to the generic clause of claim 1 which is capable of the bi-directional communication of data between electric instruments such as a personal computer, printer, PDA, facsimile equipment, pager, and portable telephone.

A device according to the generic clause of claim 1 is already known from document FR 24 94 912A .

In recent years, miniaturization of the infrared rays communication module has been strongly requested.

A conventional infrared communication device will be described with reference to Figs. 7 through 9. Fig. 7 is a perspective view of the infrared communication device, Fig. 8 shows a radiation pattern of infrared LED elements, and Fig. 9 shows a radiation pattern of a semi-spherical lens.

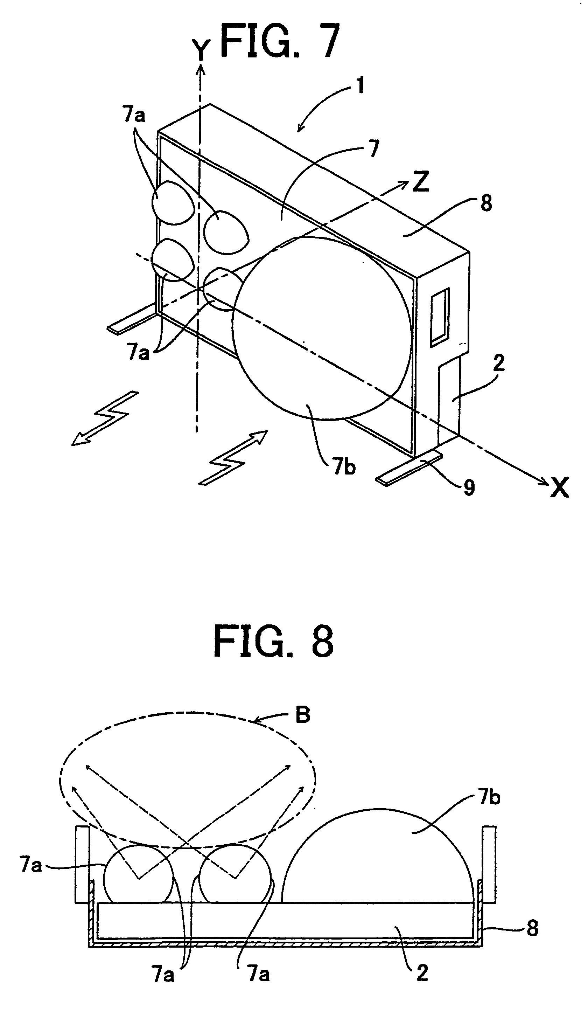

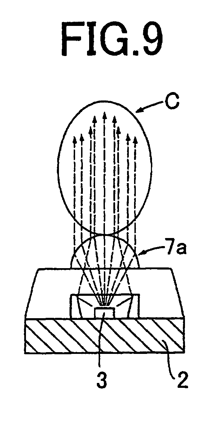

Referring to Fig. 7, an infrared communication device 1 has a substrate 2 made of glass epoxy resin having thermally stable and insulative properties. On the substrate, an electrode pattern (not shown) is formed. There is mounted four infrared LED elements 3 (Fig. 9) as light emitting elements and a photodiode (not shown) as a light receiving element on the electrode pattern on the substrate by die bonding and wire bonding. The infrared LED elements and the photodiode are electrically connected to the electrode pattern by die bond paste such as silver paste as a conductive adhesive. Furthermore, other electronic parts such as an IC chip are mounted on the substrate.

The infrared LED elements and others are covered by a light transmissive resin 7 such as an epoxy resin in which a visible rays cuting material is included. The infrared LED elements are covered by resin 7a and the photodiode is covered by resin 7b. Thus, the resin 7 allows the infrared LED and the photodiode to emit and receive the light, and also protects the elements.

The substrate, infrared LED and photodiode are mounted in a shield case 8 made of metal such as stainless steel, aluminum, copper or iron. Since the shield case 8 covers the infrared LED, photodiode and circuit, outside noises are blocked. Ends 9 of the shield case 8 are connected to a ground (not shown) .

The infrared LED element 3 has a narrow directivity, so that the infrared rays are transmitted a long distance.

The angle of four infrared LED elements 3 are positioned so as to widely spread in the X direction (Fig. 7) as shown by reference B in Fig. 8. As a result, the radiating width in the direction Z perpendicular to the X direction is narrow as shown by reference C in Fig. 9.

However, it is difficult to mount the infrared LED elements so that infrared rays are radiated in a predetermined direction.

An object of the present invention is to provide an infrared communication device in which infrared LED elements can be easily mounted in the device, and having a sufficient radiation pattern.

This object is met by the characterizing features of claim 1.

Preferred embodiments are shown in the sub claims.

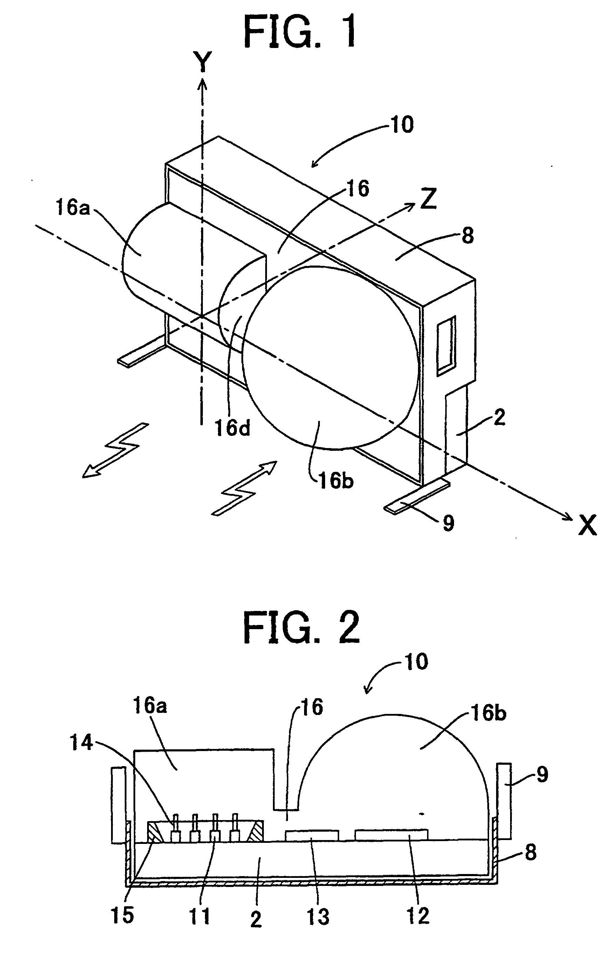

Fig. 1 is a perspective view showing a first embodiment of the present invention;
Fig. 2 is a sectional view taken along a line X of Fig. 1;

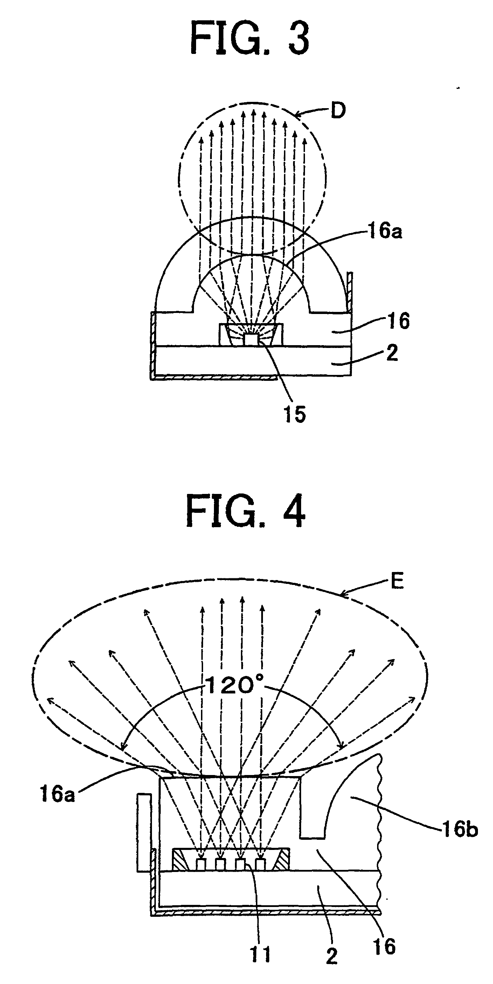

Fig. 3 shows a radiation pattern in the Z direction;
Fig. 4 shows a radiation pattern in the X direction;

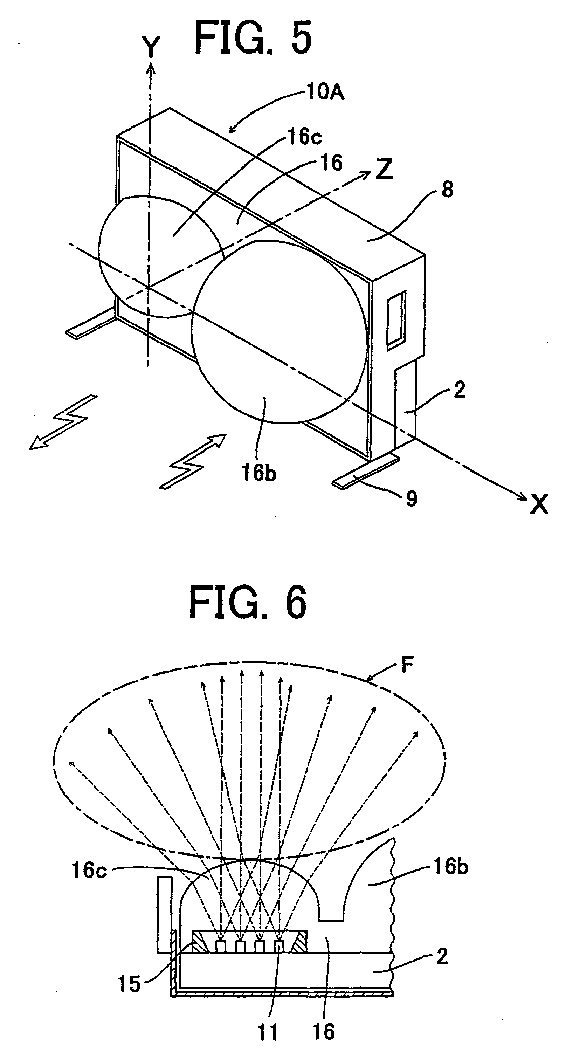

Fig. 5 is a perspective view of a second embodiment of the present invention;
Fig. 6 shows a radiation pattern in the X direction;
Fig. 7 is a perspective view of an infrared communication device;
Fig. 8 shows a radiation pattern of infrared LED elements;
Fig. 9 shows a radiation pattern of a semispherical lens.

### DETAILED DESCRIPTION OF THE PREFERRED EMBODIMENT

Referring to Figs. 1 and 2, the same parts as the conventional device of Figs. 7 and 8 are identified with the same reference numerals as Figs. 7 and 8, and the explanation of the parts are omitted.

An infrared communication device 10 of the first embodiment of the present invention is provided with four infrared LED elements 11 as a light emitting element device, a photodiode 12 as a light receiving element, an IC chip 13 and other electronic parts are mounted on the electrode pattern of the substrate 2 by die bonding of silver paste, and wire-bond mounted by bonding wires 14 of gold.

The four infrared LED elements 11 are arranged on the straight in the X direction and enclosed by a reflective cup 15. The photodiode 12 is disposed on the X line.

The infrared LED elements 11, photodiode 12, IC chip 13 and others are covered by a light transmissive resin 16 such as an epoxy resin. On the infrared LED elements 11 and the photodiode 12, a semi-cylindrical lens 16a and a semi-spherical lens 16b are formed integrally with the resin 16, so that the infrared rays are radiated and received. The semi-cylindrical lens 16a is formed such that the axis thereof coincides with the arrangement line of the infrared LED elements 11 and the photodiode 12.

As shown in Fig. 3, the radiation pattern D of the infrared rays emitted from the infrared LED elements 11 is marrow in the Z direction.

On the other hand, since the infrared LED elements 11 are arranged in the X direction, the radiation pattern E is wide as shown in Fig. 4. Although the directivity of the single infrared LED element is narrow, a wide directivity and high light power can be obtained by arranging a plurality of elements.

Referring to Figs. 5 and 6 showing the second embodiment of the present invention, the infrared communication device 10A is different from the first embodiment in the shape of the lens 16c. The lens 16c has an elongated semi-spherical shape extended in the X direction. The radiation pattern is further expanded by the elongated semi-spherical shape lens 16c as shown by the reference F in Fig. 6.

Although the lens 16a of the first embodiment has vertical end surfaces 16d, each of the surfaces may be formed into a semi-spherical shape, thereby further expanding the radiation pattern E.

In accordance with the present invention, it is not necessary to adjust angles of a plurality of lenses in desired directions. The infrared communication device can be largely miniaturized. Furthermore, since the number of lens is small, the device can be easily manufactured at a low cost.

While the invention has been described in conjunction with preferred specific embodiment thereof, it will be understood that this description is intended to illustrate and not limit the scope of the invention, which is defined by the following claims.

## Claims

1. An infrared communication device comprising:
a substrate (2),
a plurality of light emitting elements (11) mounted on the substrate (2);
a light receiving element (12) mounted on the substrate (2);
a first lens (16a, 16c) provided on the light emitting elements (11);
a second lens (16b) provided on the light receiving element (12) ;
**characterized in that**
the plurality of light emitting elements (11) are arranged in an X direction in one line with the light receiving element (12);
the first lens (16a, 16c) has an elongated convex shape which is extended in the X direction, the first lens is formed such that the longitudinal axis thereof coincides with the arrangement line of the light emitting elements (11) and light receiving element (12).

2. The infrared communication device according to claim 1, wherein the first lens (16a, 16c) has a semi-cylindrical shape.

3. The infrared communication device according to claim 1 wherein the first lens (16a, 16c) has a semi-spherical shape elongated in the X direction.

4. The infrared communication device according to claim 1, further comprising a reflective cup (15) enclosing the light emitting elements (11).

## Patentansprüche

1. Infrarot-Datenübertragungsvorrichtung, die umfasst:
ein Substrat (2),
eine Vielzahl lichtemittierender Elemente (11), die auf dem Substrat (2) angebracht sind;
ein lichtempfangendes Element (12), das auf dem Substrat (2) angebracht ist;
eine erste Linse (16a, 16c), die auf den lichtemittierenden Elementen (11) vorhanden ist;
eine zweite Linse (16b), die auf dem lichtempfangenden Element (12) vorhanden ist;
**dadurch gekennzeichnet, dass**:
die Vielzahl lichtemittierender Elemente (11) in einer X-Richtung in einer Linie mit dem lichtempfangendem Element (12) angeordnet sind;
die erste Linse (16a, 16c) eine längliche konvexe Form hat, die sich in der X-Richtung erstreckt, wobei die erste Linse so ausgebildet ist, dass die Längsachse derselben mit der Anordnungslinie der lichtemittierenden Elemente (11) und des lichtempfangenden Elementes (12) zusammen fällt.

2. Infrarot-Datenübertragungsvorrichtung nach Anspruch 1, wobei die erste Linse (16a, 16c) eine halbzylindrische Form hat.

3. Infrarot-Datenübertragungsvorrichtung nach Anspruch 1, wobei die erste Linse (16a, 16c) eine Halbkugelform hat, die in der X-Richtung verlängert ist.

4. Infrarot-Datenübertragungsvorrichtung nach Anspruch 1, die des weiteren eine reflektierende Schale (15) umfasst, die die lichtemittierenden Elemente (11) umschließt.

## Revendications

1. Dispositif de communications infrarouge, comportant :
un substrat (2),
une pluralité d'éléments d'émission de lumière (11) montés sur le substrat (2) ;
un élément de réception de lumière (12) monté sur le substrat (2) ;
une première lentille (16a, 16c) prévue sur les éléments d'émission de lumière (11) ;
une seconde lentille (16b) prévue sur l'éléments de réception de lumière (12) ;
**caractérisé en ce que**
la pluralité d'éléments d'émission de lumière (11) sont agencés dans une direction X sur une ligne avec l'élément de réception de lumière (12) ;
la première lentille (16a, 16c) a une forme convexe allongée qui s'étend dans la direction X, la première lentille est formée de sorte que l'axe longitudinal de celle-ci coïncide avec la ligne d'agencement des éléments d'émission de lumière (11) et de l'élément de réception de lumière (12).

2. Dispositif de communications infrarouge selon la revendication 1, dans lequel la première lentille (16a, 16c) a une forme semi-cylindrique.

3. Dispositif de communications infrarouge selon la revendication 1, dans lequel la première lentille (16a, 16c) a une forme semi-sphérique allongée dans la direction X.

4. Dispositif de communications infrarouge selon la revendication 1, comportant de plus une coupelle réfléchissante (15) renfermant les éléments d'émission de lumière (11).
